# EUROPEAN PATENT APPLICATION

(11) **EP 3 741 912 A1**
(43) Date of publication of application: **25.11.2020**
(21) Application number: 19176002.4
(22) Date of filing: 22.05.2019
(51) Int. Cl.: D21F 3/08, C08L 9/02, D21G 1/02

(54) **ROLL FOR MANUFACTURE OF A FIBROUS WEB AND METHOD FOR MAKING IT**

(71) Applicant: Valmet Technologies Oy, 02150 Espoo (FI)
(72) Inventor: Turunen, Jani, 41400 Lievestuore (FI); Kettunen, Heikki, 02730 Espoo (FI); Chen, Jinfu, 02150 Espoo (FI)
(74) Representative: Berggren Oy, Turku

(57) **Abstract**

The invention relates to a roll for manufacture of a fibrous web, which comprises cellulosic fibres. The roll comprises a cylindrical surface, and a roll cover, which covers the cylindrical surface, and which comprises at least one uniform cover layer which is obtained by applying a cover composition comprising a rubber phase, polyurethane elastomer precursors based on polyols and isocyanates, and a chain extender onto the cylindrical surface of the roll. The cover layer is subjected to vulcanization, wherein the formed cover layer comprises a continuous rubber matrix formed from rubber phase, and domains of polyurethane elastomer embedded within the continuous rubber matrix. The invention relates also to a method for making the roll.

## Description

The present invention relates to a roll for manufacture of a fibrous web as well as to a method for making the roll according to the preambles of the enclosed independent claims.

Various polymer coated rolls are used in manufacture of fibrous webs, such as webs of paper, board, tissue or the like. Rolls can be used in several parts of the manufacturing process, both in paper, board and tissue machines, as well as in converting and finishing machines, such as calenders and coating units. Non-limiting examples of various polymer coated rolls are calender rolls, coater rolls, reeling drums, press rolls and guide rolls. In the processes of making fibrous webs, these rolls are subjected to high mechanical loads and they should show resistance to wearing and maintain their form and surface properties. They must tolerate high rotational speeds, and the associated forces. Furthermore, they come into contact with fast moving fibrous web and possibly also other process equipment, such as doctor blades. They may also be subjected to a press from an adjacent roll.

In order to improve the surface properties, such elasticity, and wear resistance of the rolls the cylindrical surface of the roll may be covered with a roll cover. As explained above, the requirements for mechanical resistance, wear resistance, impact resistance, tensile strength and hardness are rigorous for the roll covers.

Roll covers may be made of rubber or rubber mixtures. However, the mechanical strength and/or wear resistance of a roll cover, which has been made of rubber is not always optimal, at least at elevated temperatures of over 100 °C, possibly up to or over 120 °C. These kinds of temperatures are often encountered in the paper or board making processes. It is known that various additives may be added to the rubber or rubber mixture, which is used for roll covers, but there is still a need for improvement and/or for alternative solutions to achieve desired mechanical strength and/or wear resistance.

An object of this invention is to minimise or even totally eliminate the disadvantages existing in the prior art.

Another object of the present invention is to provide a roll with improved mechanical properties, especially with improved tear strength, abrasion resistance and/or elongation.

The invention is defined in the characterising parts of the enclosed independent claims. Some preferable embodiments of the invention are defined in the dependent claims. All described features apply for all aspects of the invention, i.e. the roll, its use as well as to the method of making it, whenever applicable, even if it not necessarily always stated so.

A typical roll according to the present invention for manufacture of a fibrous web, which comprises cellulosic fibres, comprises a cylindrical surface, and a roll cover, which covers the cylindrical surface, and which comprise at least one uniform cover layer, which is obtained by applying a cover composition comprising
- a rubber phase,
- polyurethane elastomer precursors based on polyols and isocyanates, and
- a chain extender,
onto the cylindrical surface of the roll and subjecting the cover layer to vulcanization, wherein the formed cover layer comprises a continuous matrix formed from the rubber phase, and domains of polyurethane elastomer embedded within the continuous matrix of rubber.

Typically, the roll according to the present invention is used in a paper machine, board machine, tissue machine or in a converting machine for a cellulosic fibrous web.

A typical method according to the present invention for making a roll for manufacture of a fibrous web comprises
- forming a cover composition by mixing polyurethane elastomer precursors based on polyols and isocyanates and a chain extender to a continuous rubber phase,
- applying the cover composition onto a cylindrical surface of a roll and forming a uniform cover layer, which covers the cylindrical surface, and
- subjecting the formed cover layer to vulcanization, whereby the cover layer comprises a continuous rubber matrix formed from the rubber phase, and domains of polyurethane elastomer embedded within the continuous rubber matrix.

Now it has been surprisingly found out that improved cover layer properties, especially improved mechanical resistance and abrasion resistance, may be achieved when polyurethane elastomer precursors and a chain extender are mixed into a continuous rubber phase before the formation of the cover layer of a roll cover. The polyurethane precursors and chain extender begin to polymerise within the continuous rubber phase during the mixing and form domains of polyurethane elastomer, which are preferably uniformly and homogenously dispersed into the rubber phase. After the cover layer is vulcanized these polyurethane elastomer domains inside the rubber matrix provide the roll cover with improved mechanical and abrasive properties.

The roll comprises a roll body. The roll body is usually made of metal, such as cast iron or hardened steel, or of fibre reinforced plastic, and it has a cylindrical surface. The diameter of the roll body may vary according its location of use. For example, the diameter may be 200 - 2000 mm or 200 - 1900 mm. The length of the roll body depends on the width of the machine. Typically, the length of roll body may be in the range of 2.5 - 12 m, usually 4 - 8 m.

A roll cover covers the cylindrical surface of the roll. The roll cover may comprise one cover layer or a plurality of cover layers, which are arranged on top of each other. The total thickness of the roll cover is typically 15 - 50 mm. The total thickness of the roll cover comprises all possible cover layers included in the roll cover. At least one cover layer of the roll cover is obtained by applying a cover composition directly onto a cylindrical surface of a roll body or onto the preceding cover layer on the cylindrical surface and forming a uniform cover layer. The cover layer is thus arranged to enclose the cylindrical surface of the roll body or the preceding cover layer and to form a continuous sleeve around the surface of the roll body or the preceding cover layer. The cover composition may be applied, for example, by casting, extrusion or ribbon flow methods.

The cylindrical surface of the roll may be enclosed by one cover layer or two or more layers, arranged on top of each other. This means that the cover layer may be adhered directly to the surface of the roll body or, more often, via one or more cover layers lying beneath the outermost cover layer and between the roll body surface, i.e. a base cover layer and one or more intermediate cover layer(s). Preferably the cover layer, which comprises a continuous rubber matrix and domains of polyurethane elastomer embedded within the continuous rubber matrix, forms the outermost surface layer of the roll cover.

The cover composition is formed by adding under mixing polyurethane elastomer precursors based on polyols and isocyanates, i.e. polyol precursors and isocyanate precursors, and a chain extender to a continuous rubber phase, whereby domains of polyurethane elastomer are formed into the rubber phase, when the precursors react with each other and polyurethane elastomer domains are formed. According to one embodiment the cover layer comprises ≤ 30 weight-% of polyurethane elastomer, preferably 3 - 30 weight-%, more preferably 3 - 20 weight-%, even more preferably 5 - 10 weight-% of polyurethane elastomer. The polyurethane elastomer is preferably uniformly divided or dispersed in the continuous rubber matrix of the cover layer, typically as minute domains of polyurethane elastomer embedded within the continuous rubber matrix.

The rubber phase which forms the continuous phase of the cover composition or continuous matrix of the cover layer may comprise one or several different rubbers. According to one embodiment the rubber may be selected from natural rubber, nitrile butadiene rubber (NBR), hydrogenated nitrile butadiene rubber (HNBR), chloroprene rubber, ethylene propylene diene (EPDM) rubber, chlorosulphonated polyethylene (CSM) rubber, and any of their mixtures. Use of two or more rubbers in the continuous phase makes it possible to adjust the properties of the cover layer of the roll cover according to the specific needs of an individual process or sub-process.

The rubber phase is crosslinked in the vulcanization step and formed into solid continuous rubber matrix. Vulcanization may be performed in conventional temperature and pressure, for example in temperature of 50 - 180 °C, preferably 100 - 150 °C, and pressure of 2 - 10 bar, preferably 2.5 - 5.5 bar.

The cover composition comprises at least one polyurethane elastomer precursor based on isocyanate, i.e. isocyanate precursor. Isocyanate precursor can be an aromatic isocyanate, aliphatic isocyanate, or the cover composition may comprise at least two isocyanate precursors based both on aromatic isocyanate(s) and aliphatic isocyanate(s). It is also possible that the cover composition comprises two or more different isocyanate precursors, which are based on aliphatic or aromatic isocyanates. By selecting the used isocyanate precursor(s) it is possible to influence the reaction speed and/or to carefully tailor the properties of the polyurethane elastomer domains that are formed. For example, UV-resistance of the formed cover layer, as well as its mechanical and chemical properties can be tailored as desired. The properties of the formed domains influence then the final properties of the formed cover layer and may enable completely unexpected improvements in mechanical strength and abrasion resistance.

According one embodiment of the invention the precursor may be based on isocyanate, which is an aromatic isocyanate selected from group consisting of 2,4-toluene diisocyanate, 2,6-toluene diisocyanate, 4,4'- methylene diphenyl diisocyanate, 2,4'-methylene diphenyl diisocyanate, 2,2'-methylene diphenyl diisocyanate, 1,5-naphthalene diisocyanate, para-phenylene diisocyanate, 3,3'-dimethyl-4,4'-biphenylene diisocyanate, 1,4-benzene diisocyanate, 1,3-xylylene diisocyanate, 4,6-xylylene diisocyanate, and tetramethyl xylylene diisocyanate.

According one embodiment of the invention the precursor may be based on isocyanate, which is an aliphatic isocyanate selected from group consisting of 1,6-hexamethylene diisocyanate, isophorone diisocyanate, 4,4'-dicyclohexylmethane diisocyanate, tetramethylxylidene diisocyanate, trimethylhexamethylene diisocyanate, 1,3-bis(isocyanatomethyl) cyclohexane, 1,4-cyclohexyl diisocyanate and cyclohexamethylene diisocyanate.

As already mentioned, the cover composition may comprise at least one of the isocyanate precursors above, or alternatively two or more of isocyanate precursors above, selected freely from aliphatic and aromatic isocyanate based precursors.

The cover composition further comprises at least one polyurethane elastomer precursor based on polyol, i.e. polyol precursor. The cover composition may comprise one polyol precursor or alternatively two or more different polyol precursors. According to one embodiment of the invention the polyurethane elastomer precursor may be based on polyol, which is selected from group consisting of polyesters, polyethers, polycarbonate polyols and polycaprolactone polyols.

The cover composition further comprises at least one chain extender, which cures the polyurethane domains formed by the reaction between isocyanate precursors and polyol precursors. According to one embodiment of the invention the chain extender is selected from diols and diamines having weight average molecular weight ≤ 4000 g/mol, for example 60 - 4000 g/mol. Examples of suitable chain extenders are 1,4-butanediol, hydroquinone bis(2-hydroxyethyl)ether, diethyl toluene diamine and 4,4'-methylenebis(3-chloro-2,6-diethylaniline). It is assumed that the chain extender may affect the curing speed and consequently the size of the formed polyurethane elastomer domains, and thus the final properties of the cover layer. The chain extender(s) may be added to the cover composition in form of solid powder or in form of liquid.

According to one embodiment of the invention the polyurethane elastomer precursors, i.e. isocyanate and polyol precursors, and chain extender are added to the rubber phase separately, and preferably successively. When the polyurethane elastomer precursors are added separately from the chain extender(s), untimely reactions between them are avoided. In the same manner, the successive addition of the elastomer precursors and the chain-extender provides reaction time for the precursors. By adjusting the time lapse between the additions of the different components of the cover composition it is possible to tailor the quantity and quality of the polyurethane elastomer domains that are formed.

If desired, it is possible to mix the polyurethane elastomer precursors into the rubber phase of the cover composition at a different temperature than the chain extender, preferably at a higher temperature. For example, the rubber phase may be warmed to a temperature, which is suitable for the reaction between isocyanate and polyol precursors and which guarantee the effective mixing of the cover composition. e.g. suitable viscosity of the composition. After the addition of the elastomer precursors the temperature of the cover composition may be allowed to decrease before the addition the chain extender. Lower temperature at the time of the addition of the chain extender may provide more suitable formation of polyurethane domains.

In some embodiments the formed polyurethane elastomer domains may be in form of irregular or elliptical droplets, and their diameter may be < 1 µm.

According to one embodiment of the present invention the roll cover may have a tear strength > 15 N/mm; DIN abrasion loss < 200 mm³; and/or elongation value of at least 4 %. The tear strength may be, for example, in the range of 15 - 50 N/mm, preferably 25 - 50 N/mm; the DIN abrasion loss may be in the range of 1 - 200 mm³, preferably 1 - 70 mm³; and/or elongation value may be in the range of 4 - 1200 %, preferably 100 - 1200 %. This kind of values make the roll cover especially suitable for processes, where fibrous cellulosic webs are produced.

According to one embodiment of the invention the roll may be a press roll, suction roll, sizer roll, guide roll, lead roll or a coater roll.

The cover layer of the roll cover may further comprise filler particles, fibers and/or additives embedded in the continuous rubber matrix. Suitable fillers are, for example, inorganic particles, such as particles of silica, silicon carbide, carbon black, titanium oxide, feldspar, kaolin. The continuous rubber matrix may comprise one or several different filler particles. The filler particles may have an average particle diameter over 5 µm, preferably in the range of 10 - 300 µm. It is also possible to use nanosized additional filler particles, which have an average particle diameter < 1 µm, for example 5 - 40 nm. Nanosized additional filler particles can be used alone or together with larger filler particles. Use of one or more filler particles make it possible to adjust the mechanical properties of the roll cover in a proper, flexible and cost-effective manner. However, in the present invention the use of filler particles is fully optional.

According to one embodiment of the invention the filler particles, fibers and/or additives are mixed to the continuous rubber phase of the cover composition after polyurethane elastomer precursor(s) and chain extender, after the formation of polyurethane domains. The filler particles, fibres and/or additives are homogenously dispersed in the continuous rubber phase similarly with the polyurethane domains.

According to another embodiment of the invention the filler particles, fibers and/or additives are mixed to the rubber phase of the cover composition before the addition of the polyurethane elastomer precursors and chain extender. This mixing order provides interesting possibilities when the polyurethane elastomer domains are formed in the presence of the filler particles, fibres and/or additives. It may be speculated that some of the formed domains may, at least partially, physically and/or chemically interact with the filler particles, fibres and/or additives.

According to one embodiment the roll cover may comprise filler particles, fibers and/or additives in amount, which is less than 80 weight-%, preferably 10 - 75 weight-%, more preferably 20 - 60 weight-%, calculated from total weight of the roll cover.

According to another embodiment of the present invention the roll cover may comprise filler particles, fibers and/or additives in amount, which is more than 10 weight-%, preferably 15 - 60 weight-%, more preferably 20 - 50 weight-%, calculated from total weight of the roll cover.

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

### EXPERIMENTAL

Some embodiments of the invention are described in the following non-limiting examples, where cover compositions of sizer rolls were tested using varying rubber-PU compositions.

### Examples 1 - 7

In examples 1 - 7 samples simulating sizer roll covers were prepared using the same main ingredients: nitrile butadiene rubber (NBR), carbon black, aramide powder filler and additives (plasticizers, crosslinking agents etc.)

Example 1 is a comparative example representing the prior art. The composition of Example 1 was prepared according to teachings of FI 20060636 by compounding NBR rubber, carbon black, aramide powder filler and additives. No polyurethane precursor component was added to the mixture.

Examples 2 - 7 represent examples of the invention. Compositions of Examples 2 - 7 were prepared by compounding the ingredients of example 1 and a polyurethane precursor in the following manner:
NBR rubber was heated to 100 °C, the polyurethane precursor was added to NBR rubber in a mixer, followed by blending a chain extender (i.e. hardener, i.e. curative) and part of the carbon black, then aramide filler and plasticizer, and the mixture was heated to 150 °C while blending. The mixture was allowed to cool to 70 - 80 °C, then crosslinking agents and rest of the ingredients were blended to the mixture.

As the polyurethane (PU) precursor a para-phenylene diisocyanate (PPDI) based polyurethane prepolymer from Chemtura was used. The hardener in Examples 2 - 4 was an aromatic diamine MCDEA (4,4'-methylenebis(3-chloro-2,6-diethylaniline)) and in Examples 5 - 7 1,4-butanediol (BDO) was used. The amount of polyurethane precursor was varied between 10 - 20 phr (parts of hundred parts of rubber) corresponding to about 4 - 10 w-% of the composition, as shown in Table 1. In Examples 4 and 7 the amount of PU precursor is calculated to replace 20 phr of the NBR component, so the phr amount of fillers and additives is kept the same as in Example 1, whereas in Examples 2 - 6 the PU is calculated to replace part of the whole rubber mixture, thus the amount of fillers and additives was reduced to the same ratio as the rubber component.

Each rubber composition thus obtained were vulcanized in a hot press at 160 °C. Several mechanical tests were performed to the samples. The wear test was performed as DIN Abrasion test according to DIN 53516 giving material loss in mm³. Other tests performed were Tear Strength (TS) and Elongation at Break (E). The measured value for the comparative Example 1 is given in Table 1 as an absolute value, while the values for Examples 2 - 7 are given as percentage value in relation to Example 1. For wear test results, a positive percentage value indicates that the surface is more prone to wear, which is undesired, and a negative value indicates better resistance to wear, which is desired. For tear strength and elongation, a positive value indicates improvement in those properties.

As seen from Table 1 most of the measured properties were improved in the Examples according to the invention. Especially when MCDEA hardener was used in the composition almost all the properties were improved, even 20 - 30 % and more, compared to Example 1 according to the prior art. The only exception was elongation at break value of the sample 4 where filler content was higher. Similar behavior is seen when butanediol was used as a hardener.

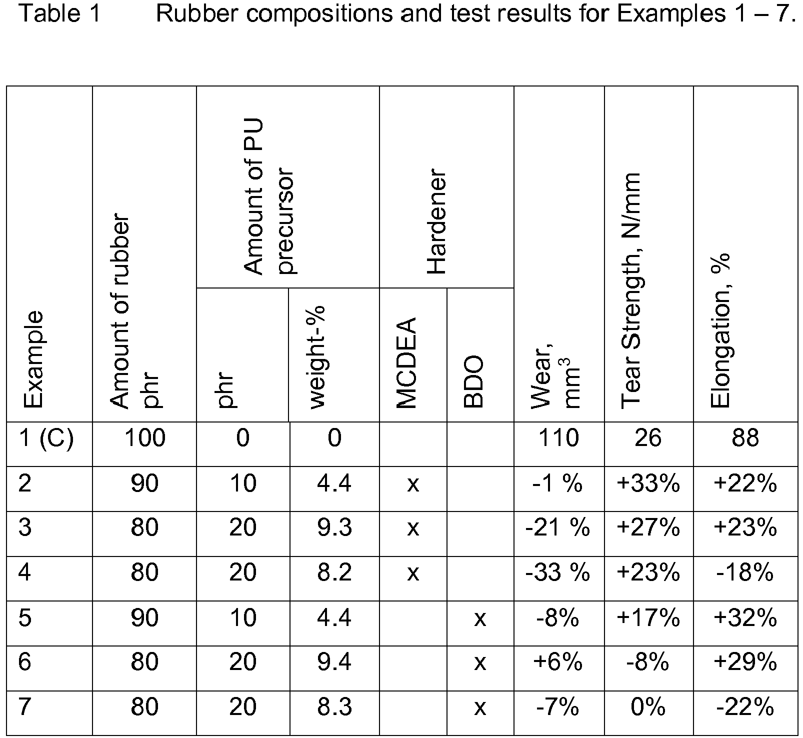

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

## Claims

1. A roll for manufacture of a fibrous web, which comprises cellulosic fibres, the roll comprising a cylindrical surface, and a roll cover, which covers the cylindrical surface and which comprises at least one uniform cover layer which is obtained by applying a cover composition comprising
- a rubber phase,
- polyurethane elastomer precursors based on polyols and isocyanates, and
- a chain extender,
onto the cylindrical surface of the roll and subjecting the cover layer to vulcanization, wherein the formed cover layer comprises a continuous rubber matrix formed from rubber phase, and domains of polyurethane elastomer embedded within the continuous rubber matrix.

2. Roll according to claim 1, **characterized in that** the cover layer comprises ≤ 30 weight-% of polyurethane elastomer, preferably 3 - 30 weight-%, more preferably 3 - 20 weight-%, even more preferably 5 - 10 weight-% of polyurethane elastomer.

3. Roll according to claim 1 or 2, **characterized in that** the rubber is selected from natural rubber, nitrile butadiene rubber, hydrogenated nitrile butadiene rubber, chloroprene rubber, ethylene propylene diene (EPDM) rubber, chlorosulphonated polyethylene (CSM) rubber, and any of their mixtures.

4. Roll according to any of preceding claims 1, 2, or 3, **characterized in that** the polyurethane elastomer precursor is based on isocyanate, which is an aromatic isocyanate, preferably selected from group consisting of 2,4-toluene diisocyanate, 2,6-toluene diisocyanate, 4,4'- methylene diphenyl diisocyanate, 2,4'-methylene diphenyl diisocyanate, 2,2'-methylene diphenyl diisocyanate, 1,5-naphthalene diisocyanate, para-phenylene diisocyanate, 3,3'-dimethyl-4,4'-biphenylene diisocyanate, 1,4-benzene diisocyanate, 1,3-xylylene diisocyanate, 4,6-xylylene diisocyanate, and tetramethyl xylylene diisocyanate.

5. Roll according to any of preceding claims 1, 2, 3 or 4, **characterized in that** polyurethane elastomer precursor is based on isocyanate, which is an aliphatic isocyanate, preferably selected from group consisting of 1,6-hexamethylene diisocyanate, isophorone diisocyanate, 4,4'-dicyclohexylmethane diisocyanate, tetramethylxylidene diisocyanate, trimethylhexamethylene diisocyanate, 1,3-bis(isocyanatomethyl) cyclohexane, 1,4-cyclohexyl diisocyanate and cyclohexamethylene diisocyanate.

6. Roll according to any of preceding claims 1 - 5, **characterized in that** the polyurethane elastomer precursor is based on polyol, which is selected from group consisting of polyesters, polyethers, polycarbonate polyols and polycaprolactone polyols.

7. Roll according to any of preceding claims 1 - 6, **characterized in that** the chain extender is selected from diols and diamines having weight average molecular weight < 4000 g/mol.

8. Roll according to any of preceding claims 1 - 7, **characterized in that** the cover layer further comprises filler particles, fibers and/or additives embedded in the continuous matrix.

9. Roll according to any of preceding claims 1 - 8, **characterized in that** the roll is a press roll, suction roll, sizer roll, guide roll, lead roll or a coater roll.

10. Use of a roll according to any of claims 1 - 9 in a paper machine, board machine, tissue machine or in a converting machine for a fibrous cellulosic web.

11. Method for making a roll for manufacture of a fibrous web, the method comprising
- forming a cover composition by mixing polyurethane elastomer precursors based on polyols and isocyanates, and a chain extender to a continuous rubber phase,
- applying the cover composition onto a cylindrical surface of a roll and forming a uniform cover layer, which covers the cylindrical surface, and
- subjecting the formed cover layer for vulcanization, whereby the cover layer comprises a continuous rubber matrix formed from the rubber phase, and domains of polyurethane elastomer embedded within the continuous rubber matrix.

12. Method according to claim 11, **characterized in that** polyurethane elastomer precursors and chain extender are added to the rubber phase separately and preferably successively.

13. Method according to claim 11 or 12, **characterized in that** polyurethane elastomer precursors are mixed to the rubber phase at a different temperature than the chain extender, preferably at a higher temperature.

14. Method according to claim 11, 12 or 13, **characterized in that** filler particles, fibers and/or additives are mixed to the rubber phase after polyurethane elastomer precursor(s) and chain extender.

15. Method according to claim 11, 12 or 13, **characterized in that** filler particles, fibers and/or additives are mixed to the rubber phase before polyurethane elastomer precursor(s) and chain extender.
